# EUROPÄISCHE PATENTSCHRIFT

(11) **EP 1 488 091 B1**
(45) Veröffentlichungstag und Bekanntmachung des Hinweises auf die Patenterteilung: **23.07.2008**
(21) Anmeldenummer: 03744792.7
(22) Anmeldetag: 08.03.2003
(51) Int. Cl.: F02D 41/40, F02B 23/06

(54) **SELBSTZÜNDENDE BRENNKRAFTMASCHINE**
COMPRESSION IGNITION INTERNAL COMBUSTION ENGINE
MOTEUR A COMBUSTION INTERNE A AUTO-ALLUMAGE

(30) Priorität: 22.03.2002 DE 10213011
(43) Veröffentlichungstag der Anmeldung: 22.12.2004
(73) Patentinhaber: Daimler AG, 70327 Stuttgart (DE)
(72) Erfinder: HUTMACHER, Rolf, 73630 Remshalden (DE); KÖNIG, Gerhard, 73111 Lauterstein (DE); MADERTHANER, Karl, 70327 Stuttgart (DE); RAAB, Alois, 73560 Böbingen (DE)
(74) Vertreter: Kreiser, André Manfred
(86) Internationale Anmeldenummer: PCT/EP2003/002393
(87) Internationale Veröffentlichungsnummer: WO 2003/081010

(56) Entgegenhaltungen:
- EP-A- 0 786 592
- EP-A- 0 853 188
- DE-A- 19 953 932
- US-A- 5 103 789
- US-B1- 6 302 080
- RON ZEVENHOVEN: "NON-IDEAL GASES IN DIESEL ENGINE PROCESSES" FIRST BIENNAL MEETING AND GENERAL SECTION MEETING OF THE SCANDINAVIAN-NORDIC SECTION OF THE COMBUSTION INSTITUTE,CHALMERS UNIVERSITY OF TECHNOLOGY, GOTHENBURG,(SWEDEN), [Online] 18. - 20. April 2001, Seiten 1-6, XP002240088 gothenburg Gefunden im Internet: <URL:ron.zevenhoven hut.fi> [gefunden am 2003-05-06]
- GORONCY J: "DIREKTEINSPRITZENDER DIESELMOTOR MIT 1,9 L HUBRAUM DIRECT-INJECTED DIESEL ENGINE FOR GOLF AND VENTO" MTZ MOTORTECHNISCHE ZEITSCHRIFT, FRANCKH'SCHE VERLAGSHANDLUNG,ABTEILUNG TECHNIK. STUTTGART, DE, Bd. 54, Nr. 10, 1. Oktober 1993 (1993-10-01), Seiten 506-507, XP000397806 ISSN: 0024-8525

## Beschreibung

Die Erfindung betrifft ein Verfahren zum Betrieb einer Hubkolbenbrennkraftmaschine nach Anspruch 1, insbesondere einer Dieselbrennkraftmaschine.

Bei den modernen Brennkraftmaschinen mit Selbstzündung wird der Kraftstoff in einen Brennraum direkt eingespritzt. Bei einer solchen Verbrennung entstehen prinzipbedingt durch die heterogene Art der Verbrennungsführung zwangsläufig örtliche Zonen, bei denen ein nahezu stöchiometrisches Kraftstoff/Luftgemisch vorliegt. In diesen Zonen ergeben sich hohe Verbrennungstemperaturen, wodurch eine hohe thermische NO-Bildung resultiert. Auf der anderen Seite entstehen weitere kraftstoffreiche Zonen, in denen Ruß gebildet wird. Bei guter turbulenter Vermischung und Luftüberschuss wird ein Teil des gebildeten Rußes wieder oxidiert, wobei ein vollständiger Rußabbrand nicht erreicht wird.

Aus der DE 19953932 A1 ist ein Verfahren bekannt, bei dem eine kombinierte homogen/heterogene Betriebsweise für die Erzielung mittlerer und höherer Lasten vorgeschlagen wird. Bei diesem Verfahren sollen mit einer Einspritzstrategie sowohl eine frühe homogene Gemischbildung im Kompressionshub als auch eine darauffolgende heterogene Gemischbildung um den oberen Totpunkt ermöglicht werden, wobei die Kraftstoffeinspritzung bei der homogenen Gemischbildung mit einem geringeren Einspritzdruck als bei der heterogenen Gemischbildung erfolgt, um ein Auftragen von Kraftstoff auf die kalten Brennraumwände zu vermeiden.

Es hat sich dennoch gezeigt, dass trotz der oben vorgeschlagenen Maßnahme Kraftstoffanteile an die Brennraumwände gelangen, die größtenteils nicht an der homogenen Verbrennung teilnehmen, und zu erhöhten HC- und CO-Emissionen führen. Daher müssen weitere Maßnahmen getroffen werden, mit denen jede weitere Brennraumwandbenetzung mit Kraftstoff verhindert werden.

Aus der DE 199 53 932 A1 der Anmelderin ist zudem ein Verfahren zum Betrieb einer Hubkolbenbrennkraftmaschine bekannt, bei dem in unterschiedlichen Lastbereichen der Kraftstoff zu unterschiedlichen Zeiten in den Brennraum eingespritzt wird, um eine Wandanlagerung zu vermeiden.

Der Erfindung liegt die Aufgabe zugrunde, ein alternatives Verfahren für eine Brennkraftmaschine mit Selbstzündung zu schaffen, mit dem eine Kraftstoffanlagerung an den Wänden des Brennraums vermieden wird. Dies wird erfindungsgemäß durch die Merkmale des Anspruchs 1 gelöst.

Weitere Ausgestaltungen ergeben sich aus den Unteransprüchen.

Nach dem erfindungsgemäßen Verfahren wird der Kraftstoff direkt in einen Brennraum mittels einer Einspritzvorrichtung eingespritzt, welche eine Einspritzdüse mit mehreren Einspritzbohrungen und einer Düsennadel umfasst. Ein Teil der Einspritzung des Kraftstoffes des jeweiligen Zyklus erfolgt in einem Verdichtungshub der Brennkraftmaschine als eine getaktete Voreinspritzung in mehreren Teilmengen in Form von Kraftstoffstrahlen mit bestimmter Reichweite, wobei der restliche Kraftstoff als eine Haupteinspritzung zu einem späteren Zeitpunkt eingespritzt wird. Der Kraftstoff wird während der Haupteinspritzung in den Brennraum wahlweise mit einem höheren Druck als während der Voreinspritzung eingespritzt.

Die Taktung der Voreinspritzung erfolgt erfindungsgemäß derart, dass die Reichweite des Kraftstoffstrahls bei jeder eingespritzten Teilmenge im Brennraum begrenzt wird. Die Reichweite ist in etwa kleiner als eine Entfernung bis zu einer Brennraumbegrenzung, wobei ein Zerfall der eingespritzten Kraftstoffstrahlen im Brennraum verstärkt wird. Die einzelnen Einspritztakte werden während der Voreinspritzung derart gestaltet, dass jeweils die Strahlimpulse der Einzeleinspritzungen angepasst werden, und bei der momentan vorliegenden Brennraumgasdichte die Reichweite der Kraftstoffstrahlen in etwa die Strecke bis zu der brennraumseitigen Zylinderwand oder dem Kolbenboden beträgt. Somit wird ein Kraftstoffwandauftrag vermieden. Die Steuerung des Einspritzstrahlimpulses und der EinspritzTeilmenge erfolgt durch die Pulsdauer in Kombination mit gezielter Nutzung der Drosselung des zuströmenden Kraftstoffes im Sitz der Düsennadel, so dass die eingespritzten Kraftstoffstrahlen durch eine verstärkte Zerstäubung zerfallen. Dadurch findet eine bestmögliche Gemischhomogenisierung der eingespritzten Teilmengen statt, wobei gleichzeitig ein signifikanter Kraftstoffauftrag auf die Zylinderwand vermieden wird.

Durch den höheren Druck werden für den heterogenen Verbrennungsanteil, die Kriterien für eine effektive konventionelle Einspritzung erfüllt, da es hier auf einen hohen Strahlimpuls, intensive Strahl-/Wand Interaktion, sowie eine möglichst gute Luftausnutzung und turbulente Mischung ankommt.

Erfindungsgemäß wird der Druck des eingespritzten Kraftstoffs während der getakteten Voreinspritzung angehoben, um während der Kompression den ansteigenden Brennraumdruck entgegenzuwirken. Dadurch kann beispielsweise die Eindringtiefe der Einspritzstrahlen im Brennraum während der getakteten Voreinspritzung konstant gehalten werden.

Gemäß einer Ausführungsform der Erfindung wird während der getakteten Voreinspritzung ein Hub der Düsennadel der Einspritzdüse variiert. Dies ermöglicht eine gezielte Kraftstoffeinspritzung während der getakteten Voreinspritzung, wodurch der Betriebsbereich mit rein homogener Verbrennung weiter ausgedehnt werden kann. Weiterhin ermöglicht die Variation des Nadelhubes einen hohen Homogenisierungsgrad, da die Anlagerung von Kraftstoffteilchen an den Brennraumwänden minimiert wird. Dadurch kann die Klopfneigung zu einem gewissen Grad verringert werden.

Gemäß einer weiteren Ausführung der Erfindung wird eine Taktdauer während der Voreinspritzung derart variiert, dass die Kraftstoffteilmengen der Voreinspritzung unterschiedlich erfolgen. Dabei kann die Variation derart gestaltet werden, dass die später eingespritzte Kraftstoffteilmenge größer als die vorherige Kraftstoffteilmenge erfolgt. Weiterhin kann erfindungsgemäß die letzte Kraftstoffteilmenge der Voreinspritzung gegenüber einer größten und vorher erfolgten Kraftstoffteilmenge der Voreinspritzung verringert werden, um eine starke Anfettung der bereits vorhomogenisierten Gemischwolke entgegenzuwirken.

Für eine höhere Zerstäubung des Kraftstoffs wird erfindungsgemäß der Hub der Düsennadel der Einspritzdüse derart variiert, dass eine instabile kavitierende Strömung in den Einspritzbohrungen der Einspritzdüse erzeugt wird. Dadurch kann ein Aufweiten der Einspritzstrahlen und damit eine bessere Verteilung des Kraftstoffes erreicht werden.

Zur gezielten Einstellung einer gewünschten Drosselwirkung im Sitz der Düsennadel und einer instabilen kavitierenden Strömung kann mit einer geeigneten konstruktiven Maßnahme, beispielsweise durch einen 2-Federhalter am Einspritzventil oder einen Piezo- bzw. Magnetostriktive Ansteuerung das Verharren der Düsennadel auf einer Hubstellung, die zwischen der vollständig geschlossenen bzw. geöffneten Position liegt, unterstützt werden. Der effektive Strömungsquerschnitt im Nadelsitz, d.h. zwischen der Düsennadel und dem Nadelsitz, sollte dabei in etwa das 0.4 bis 1.5 -fache des effektiven Strömungsquerschnittes der Summe der Einspritzbohrungen betragen.

Durch die im Kompressionshub erzielte Gemischbildung der voreingespritzten Kraftstoffmenge wird bei der Verbrennung bei einem hohen Luftüberschuss eine nennenswerte thermische NO-Bildung, sowie eine Rußbildung vermieden, da der Kraftstoff fein und weiträumig im gesamten Brennraum verteilt wird. Bei der angepassten und spät erfolgten Haupteinspritzung wird für die heterogene Verbrennungsphase die thermische NO-Bildung deutlich vermindert, da die Sauerstoffkonzentration durch den vorangegangenen homogenen Verbrennungsanteil schon deutlich reduziert wird. Vorzugsweise wird eine intensive turbulente Ladungsbewegung durch die Einspritzung induziert, welche durch den hohen Einspritzdruck unterstützt wird.

Eine optimale Homogenisierung des voreingespritzten Kraftstoffanteile im Verdichtungshub wird durch die getaktete Voreinspritzung erreicht, so dass die zuerst eingespritzten Kraftstoffstrahlen im Brennraum verdampfen, und dann sich mit Luft vermischen, bevor die nächsten Strahlen darauf folgen. Da mit der Zunahme der Verdichtung der Brennraumdruck ebenso zunimmt, ist die Zugabe von mehr Kraftstoff bei der darauffolgenden Taktung gegeben.

Die später erfolgten Teilmengen in Form von Kraftstoffstrahlen werden dabei durch den erhöhten Brennraumdruck daran gehindert, an die Brennraumwand bzw. Brennraumbegrenzung zu gelangen. Somit wird eine Steigerung der eingespritzten Kraftstoffmenge bei der darauffolgenden Teilmenge während der Taktung ermöglicht, welche mittels einer Druckerhöhung des Kraftstoffeinspritzdruckes oder durch eine Verlängerung des Nadelhubes.

Durch eine erweiterte Taktdauer wird ebenso eine Steigerung der eingebrachten Kraftstoffmenge erzielt. Denkaber wäre auch eine gleichzeitige Kombination von zwei oder sogar von drei der zuvor genannten Maßnahmen.

Eine Abnahme der Einspritzteilmenge bei der letzten Taktung kann vorteilhaft sein, um eine vorzeitige Zündung des homogenisierten Gemisches vor Eintritt der Haupteinspritzung zu verhindern. Weiterhin kann durch die Verkleinerung der letzten Teilmenge bei der getakteten Voreinspritzung eine Überfettung der vorhomogenisierten Gemischwolke vermieden werden.

Um die Homogenisierungsrate während der Voreinspritzung zu erhöhen, wird im Brennraum eine Drallbewegung, beispielsweise durch einen Dralleinlasskanal erzeugt. Ziel ist es dabei, eine während eines Einspritztaktes erzeugte Kraftstoffwolke eines eingespritzten Kraftstoffstrahls zu versetzen bzw. seitlich derart zu verschieben oder fortzubewegen, dass bei einem nachfolgenden Einspritztakt der neu eingespritzte Kraftstoffstrahl nicht in die Kraftstoffwolke des vorangegangenen Kraftstoffstrahl eindringt.

Gemäß einer besonders vorteilhaften Ausführungsform findet für den homogenen Verbrennungsanteil die Voreinspritzung mit einer zwei- bis siebenfachen Taktung in einem Kompressionshubbereich von ca. 150°KW bis 30°KW vor dem oberen Totpunkt statt. Die Anzahl der Taktung sowie der Einspritzzeitpunkt der ersten Teilmenge können lastabhängig variiert werden.

Die Haupteinspritzung wird dagegen für den heterogenen Verbrennungsanteil in einem Bereich um den oberen Totpunkt entweder als eine Blockeinspritzung oder mit einem unterschiedlichen Einspritzverlauf vorgenommen, so dass innerhalb der Haupteinspritzdauerlänge der Durchfluss der eingespritzten Kraftstoffmenge variiert wird, um einen hohen Impuls der Einspritzstrahlen zu erzielen. Eine Haupteinspritzung mit unterschiedlichem Durchfluss kann mittels einer Druckmodulation und/oder durch eine Hubvariation der Düsennadel erzielt werden. Um den Erfordernissen für eine effektive und heterogene Verbrennung zu genügen, wird vorzugsweise der Einspritzdruck, beispielsweise durch eine druckmodulierbare Einspritzvorrichtung, auf ein maximales Niveau, beispielsweise zwischen 1800 und 2400 bar angehoben. Gegebenenfalls kann durch eine unmittelbar nach dem Schließen der Düsennadel bei der Blockeinspritzung eine kurze Nacheinspritzung folgen, um eine weitere Russreduktion zu erzielen. Es ist denkbar, dass sowohl die Voreinspritzung als auch die Haupteinspritzung mit dem gleichen Kraftstoffdruck erfolgen. Dabei kann beispielsweise in einem Common-Rail-System ein Druckniveau zwischen 1000 und 1400 bar herrschen.

Wahlweise ist die Nacheinspritzung ein Teil der Haupteinspritzung. Um eine optimale Verbrennung zu erzielen, erfolgen die Haupteinspritzung und gegebenenfalls die Nacheinspritzung lastabhängig hintereinander um den oberen Totpunkt in einem Bereich von 10°KW vor dem oberen Totpunkt bis 40°KW nach dem oberen Totpunkt, wobei eine Düsennadelöffnungsdauer bei der Nacheinspritzung kleiner als die Nadelöffnungsdauer der Haupteinspritzung eingestellt wird. Optional kann auch eine späte Nacheinspritzung stattfinden, die wiederum an der Verbrennung nicht teilnimmt, und nur zur Regenerierung eine nachgeschalteten Abgasnachbenadlungsanlage dienen kann.

Bei dem erfindungsgemäßen Verfahren wird eine Einspritzstrategie vorgeschlagen, die es ermöglicht, eine vorteilhafte Kraftstoffstrahlausbreitung und Gemischbildung gezielt umzusetzen. Es wird sowohl eine homogene als auch eine heterogene kombinierte Verbrennung erzielt. Dabei wird eine Mehrlochdüse verwendet. Bevorzugt wird mittels eines geeigneten druckmodulierbaren Einspritzsystems der Einspritzdruck angepasst. Dabei kann ein Nadelhubgesteuertes E-System mit Druckmodulation verwendet werden.

Weitere Kriterien für die Gestaltung einer zusätzlichen Nacheinspritzung können sich aus der Anforderungen einer etwaigen Abgasnachbehandlungsmaßnahme ergeben.

Zur Durchführung des erfindungsgemäßen Verfahrens eignet sich ein Brennraum, der im Zylinderkopf eine im Bereich einer Zylindermittelachse angeordnete Einspritzdüse mit einer nach innen öffnenden Düsennadel und einen Kolben aufweist, wobei sich im Kolbenboden eine Kolbenmulde mit einem mittig angeordneten Kompressionsvorsprung befindet.

Vorteilhaft ist es, wenn der Hub der Düsennadel der Einspritzdüse derart eingestellt ist, dass innerhalb der Einspritzdüse ein effektiver Strömungsquerschnitt zwischen der Düsennadel und dem Nadelsitz etwa das 0.4 bis 1.5-fache eines effektiven Strömungsquerschnittes der Summe aller Einspritzbohrungen beträgt.

Die Kolbenmulde weist vom Kolbenboden aus zunächst einen flachen Einlauf mit einer geringen Krümmung und ab dem Bereich der maximalen Muldentiefe eine bis in den Kolbenmuldenvorsprung reichende stärkere Krümmung auf. Zwischen dem Kolbenboden und der Kolbenmulde ist ein Übergang abgerundet ausgeführt. Der Kolbenmuldenvorsprung weist eine kegelartige Form mit abgerundeter stumpfer Spitze.

Gemäß der Erfindung wird die Benetzung der Brennraumwände während der getakteten Voreinspritzung so verhindert, dass die im Bereich der Zylindermittelachse angeordnete Einspritzdüse den Kraftstoff in Form von Kraftstoffstrahlen mit einer begrenzten Reichweite einspritzt, dass der einsgespritzte Kraftstoff die im Kolbenboden angeordnete Kolbenmulde in nicht signifikantem Maße benetzt.

Die Kolbenmulde ist in ihrer Grundform annähernd tellerförmig ausgebildet, wobei sich aus der Mitte der Kolbenmulde ein Vorsprung in Richtung der Einspritzdüse erstreckt. Durch die tellerartige Grundform treten in der Kolbenmulde keine enge Radien an der Oberfläche oder Querschnittssprünge im Kolbenmaterial auf, so dass im Betrieb der Brennkraftmaschine, falls auf die Mulde Kraftstofftröpfchen auftreffen, diese schnell verdampfen.

Da die Muldentiefe zum Kolbenaußendurchmesser hin geringer wird und am Übergang zum Kolbenboden ein flacher Einlauf bei keinerlei scharfen Übergängen vorgesehen ist, wird die Anlagerung vom Kraftstoff verhindert.

Eine vorteilhafte Brennraumform sowie Einspritzdüsenkonfiguration sehen vor, dass ein Spritzkegelwinkel von 90° bis 160° einstellbar ist, wodurch ermöglicht wird, dass bei der früh erfolgten Voreinspritzung eine verstärkte Homogenisierung stattfindet sowie ein Kraftstoffauftrag an der Zylinderwand stark vermindert wird. Gleichzeitig wirkt sich die geometrische Brennraumform sehr vorteilhaft auf die heterogene Gemischbildung bei der Haupteinspritzung, so dass sich ein kombinierter Homogen/Heterogen-Betrieb innerhalb eines Arbeitspiels mit einer konventionellen Mehrlochdüse leicht gestalten lässt.

Erfindungsgemäß ist der Hub der Düsennadel in einer Öffnungsrichtung verstellbar, so dass während der getakteten Voreinspritzung der Hub der Düsennadel variabel eingestellt werden kann. Die Einstellung des Hubes kann wahlweise lastabhängig erfolgen. Dadurch wird die während der getakteten Voreinspritzung erfolgte Einspritzmenge variiert. Des Weiteren wird mit der Verstellung des Hubes eine instabile kavitierende Strömung in den Einspritzbohrungen der Einspritzdüse erzeugt.

Vorteilhafter weise ist für die Einspritzung des Kraftstoffs mindestens eine Einspritzdüse vorgesehen, welche im Zylinderkopf der Brennkraftmaschine in etwa zentral angeordnet ist. Es kann sich prinzipiell um eine konventionelle und damit kostengünstige Lochdüse vom Typ Sitzloch, Mini-Sackloch oder Sackloch handeln.

Die Einspritzdüse kann sechs bis vierzehn Einspritzbohrungen aufweisen, welche in einer oder zwei Lochreihen über dem Umfang verteilt angeordnet sind. Die Verteilung kann gleichmäßig erfolgen. Die Einspritzbohrungen sind jeweils um einen Winkel von 45° bis 80° zur Düsenachse geneigt. Der Spritzkegelwinkel beträgt ca. 90° bis 160°.

Weitere Vorteile ergeben sich aus der folgenden Zeichnungsbeschreibung. In der Zeichnung sind Ausführungsbeispiele der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Es zeigen:
- Fig. 1: einen schematischen Querschnitt durch eine Hubkolbenbrennkraftmaschine,
- Fig. 2: ein Diagramm für einen Verlauf einer Kraftstoffeinspritzung mit 5-fach getakteter Voreinspritzung und ansteigender Taktdauer und zunehmendem Nadelhub bei konstantem Einspritzdruck, sowie einer Haupteinspritzung mit Nacheinspritzung bei einem erhöhten Einspritzdruck,
- Fig. 3: ein Diagramm für einen Verlauf einer Kraftstoffeinspritzung mit 5-fach getakteter Voreinspritzung mit gleichbeleibender Taktdauer bei konstantem Nadelhub und steigendem Einspritzdruck während der Voreinspritzung, sowie einer Haupteinspritzung mit Nacheinspritzung bei einem erhöhten Einspritzdruck,
- Fig. 4: ein Diagramm für einen Verlauf einer Kraftstoffeinspritzung mit 4-fach getakteter Voreinspritzung mit ansteigender Taktdauer bei konstantem Einspritzdruck, sowie einer Haupteinspritzung mit Nacheinspritzung bei einem erhöhten Einspritzdruck,
- Fig. 5: eine Schematische Darstellung der Wirkung einer instabilen kavitierenden Strömung im Düsenloch einer Mehrlochdüse,
- Fig. 6: eine Schnittdarstellung des Brennraums mit der Anordnung der Einspritzdüse sowie der Kolbenmulde während der Voreinspritzung, und
- Fig. 7: eine Schnittdarstellung des Brennraums mit der Anordnung der Einspritzdüse sowie der Kolbenmulde während der Haupteinspritzung.

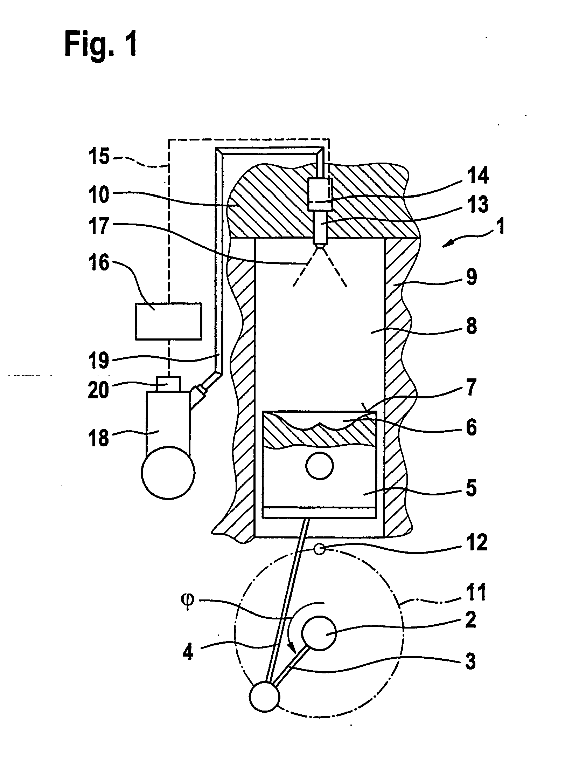

Fig. 1 zeigt eine Hubkolbenbrennkraftmaschine 1, bei der eine Kurbelwelle 2 durch einen in einem Zylinder 9 geführten Kolben 5 über eine Pleuelstange 4 angetrieben wird. Zwischen dem Kolben 5 und einem Zylinderkopf 10 wird im Zylinder 9 ein Brennraum 8 gebildet, der eine in den Kolbenboden 7 eingelassene Kolbenmulde 6 umfaßt.

Bei der Drehung einer Kurbel 3 der Kurbelwelle 2 auf einem Kurbelkreis 11 im Uhrzeigersinn verkleinert sich der Brennraum 8, wobei die in ihm eingeschlossene Luft verdichtet wird. Der Ladungswechsel im Brennraum 8 erfolgt über nicht dargestellte Gaswechselventile und Gaskanäle im Zylinderkopf 10.

Mit dem Erreichen eines oberen Totpunktes 12 der Kurbel 3, nachfolgend mit OT bezeichnet, ist das Ende der Verdichtung erreicht, bei dem der Brennraum 8 sein kleinstes Volumen annimmt und der höchste Verdichtungsdruck sowie die höchste Verdichtungstemperatur erreicht werden. Die aktuelle Lage des Kolbens 5 zum Zylinderkopf 10 wird durch den Kurbelwinkel ϕ in Bezug auf den oberen Totpunkt 12 bestimmt.

Eine Mehrlocheinspritzdüse 13 ist im Zylinderkopf 10 zentral angeordnet. Die Einspritzdüse 13 wird über eine Signalleitung 15 und einen Aktuator 14, beispielsweise einen Piezoaktuator, von einer elektronischen Steuereinheit 16, der Motorsteuerung, angesteuert. Die aus der Einspritzdüse austretenden Einspritzstrahlen sind mit 17 bezeichnet.

Der Kraftstoff wird von einer Einspritzpumpe 18 in mehreren Druckstufen zur Verfügung gestellt, wobei ein Absteuerventil 20, zweckmäßigerweise ein elektronisch ansteuerbares Magnetventil, den jeweiligen maximalen Druck in der Kraftstoffleitung 19 begrenzt.

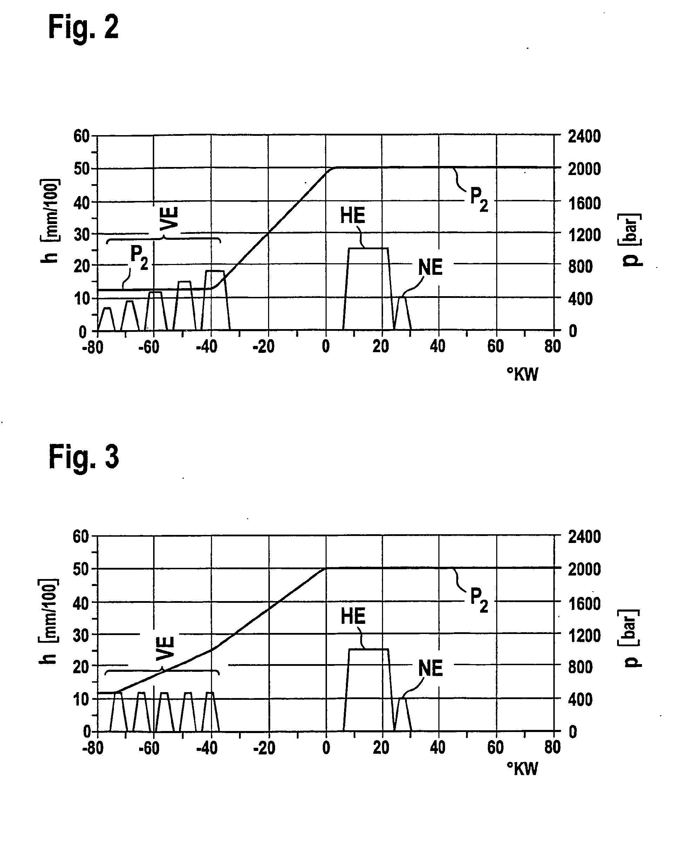

Eine erste Ausführungsform einer Kraftstoffeinspritzstrategie für die Hubkolbenbrennkraftmaschine 1 ist in Fig. 2 dargestellt Das Diagramm zeigt einen Verlauf der Kraftstoffeinspritzung für einen kombinierten Homogen/Heterogen-Betrieb mit 5-fach getakteter Voreinspritzung VE und ansteigender Taktdauer bei konstantem Einspritzdruck P₁, der beispielsweise 500 bar beträgt. Weiterhin zeigt Fig. 2 eine Haupteinspritzung HE sowie eine Nacheinspritzung NE bei einem erhöhten Einspritzdruck P₂, wobei während der Haupteinspritzung HE einen maximalen Nadelhub h eingestellt ist.

Gemäß der in Fig. 2 dargestellten Einspritzstrategie erfolgt zuerst bei einem Einspritzdruck P₁ eine getaktete Voreinspritzung VE im Kompressionshub der Hubkolbenbrennkraftmaschine 1 in einem Kurbelwinkelbereich von 80°KW bis etwa 35°KW vor OT. Die getaktete Voreinspritzung VE erfolgt derart, dass bei jeder Taktung einen unterschiedlichen Nadelhub h eingestellt wird. Durch die gezielte Taktung der Voreinspritzung VE wird eine Homogenisierung der eingespritzten Teilmengen erreicht. Es wird eine steigende Nadelhubeinstellung bevorzugt. Die Haupt-und Nacheinspritzung erfolgen nacheinander bei einem höheren Einspritzdruck P₂ in einem Bereich zwischen OT und etwa 30°KW nach OT. Bei der Haupteinspritzung HE wird ein höherer Nadelhub h als bei der Voreinspritzung VE eingestellt, wobei eine Nadelöffnungsdauer bei der Nacheinspritzung NE kleiner als die Nadelöffnungsdauer der Haupteinspritzung HE eingestellt wird.

In Fig. 3 ist ein Diagramm dargestellt, in dem für die Hubkolbenbrennkraftmaschine 1 eine alternative Einspritzstrategie gezeigt ist. Darin ist der Verlauf einer Kraftstoffeinspritzung dargestellt, mit der einen kombinierten Homogen/Heterogen-Betrieb mit 5-fach getakteter Voreinspritzung VE zur Homogenisierung mit gleichbeleibender Taktdauer und steigendem Einspritzdruck während der Voreinspritzung VE, sowie einer Haupteinspritzung HE mit einem erhöhten Einspritzdruck P2 bei einem maximal eingestellten Nadelhub h und einer Nacheinspritzung NE erzielt wird.

Die getaktete Voreinspritzung VE gemäß Fig. 3 erfolgt im Kompressionshub in einem Kurbelwinkelbereich von etwa 80°KW bis etwa 35°KW vor OT. Sie erfolgt derart, dass bei jeder Taktung der Einspritzdruck zunimmt, d.h. während der Voreinspritzung VE herrscht in einer Kraftstoffleitung, beispielsweise in einem Common-Rail-Einspritzsystem, der Leitung bei der früh erfolgten Einspritzung ein niedriger Druck als bei der darauffolgenden Einspritzung, wobei der Nadelhub h während der getakteten Voreinspritzung VE konstant bleibt. Die Haupt- und Nacheinspritzung erfolgen nacheinander bei einem höheren Einspritzdruck P2 in einem Bereich zwischen dem oberen Totpunkt und etwa 30°KW nach OT. Bei der Haupteinspritzung HE wird ein höherer Nadelhub h als bei der Voreinspritzung VE eingestellt, wobei eine Nadelöffnungsdauer bei der Nacheinspritzung NE kleiner als die Nadelöffnungsdauer der Haupteinspritzung HE eingestellt wird.

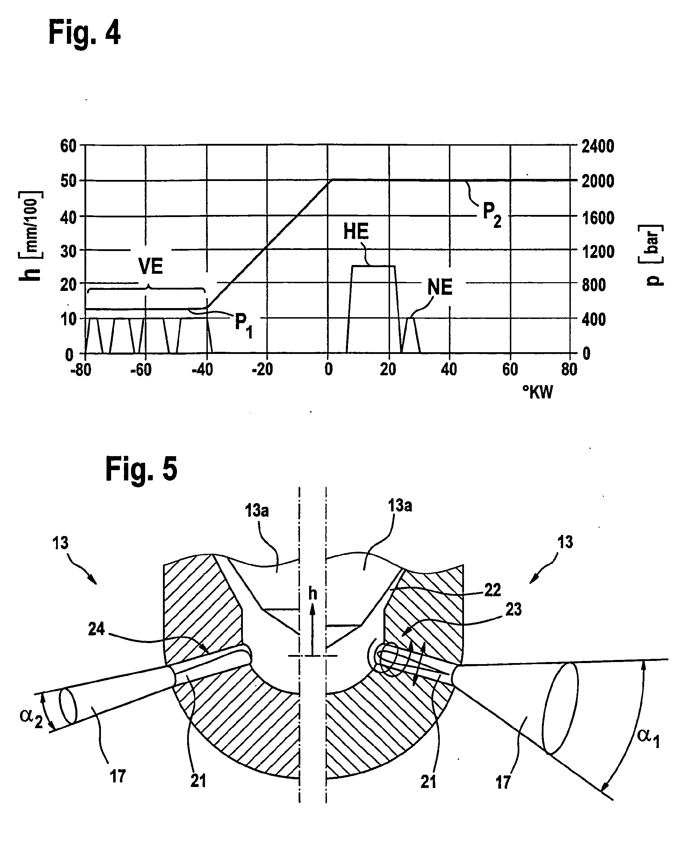

Eine besonders vorteilhafte Einspritzstrategie sieht der Einspritzverlauf gemäß Fig. 4 vor. Darin wird ein kombinierter Homogen/Heterogen-Betrieb mit 4-fach getakteter Voreinspritzung mit ansteigender Taktdauer bei konstantem Einspritzdruck vorgeschlagen, bei dem die Düsennadel 13a bei einer unteren Hubstellung verharrt. Weiterhin ist eine Haupteinspritzung HE bei einem erhöhten Einspritzdruck P2 und einem maximal eingestelltem Nadelhub h sowie eine Nacheinspritzung NE vorgesehen.

Die getaktete Voreinspritzung VE erfolgt im Kompressionshub in einem Kurbelwinkelbereich von 80°KW bis etwa 35° KW vor OT. Sie wird derart vorgenommen, dass bei jeder Taktung der Einspritzdruck P1 konstant bleibt. Der Nadelhub h bleibt ebenso während der getakteten Voreinspritzung VE konstant. Die Haupt- und Nacheinspritzung erfolgen nacheinander bei einem höheren Einspritzdruck P2 in einem Bereich zwischen dem oberen Totpunkt und etwa 35°KW nach OT. Bei der Haupteinspritzung HE wird ein höherer Nadelhub h als bei der Voreinspritzung VE eingestellt, wobei eine Nadelöffnungsdauer bei der Nacheinspritzung NE kleiner als die Nadelöffnungsdauer der Haupteinspritzung HE eingestellt wird.

Der niedrige Einspritzdruck P₁ in den o. g. Einspritzstrategien gemäß Fig. 2, 3 und 4 ist so gewählt, dass durch die getaktete Voreinspritzung VE eine homogene Gemischbildung erfolgt, bei der sich der eingespritzte Kraftstoff in nicht signifikantem Maße an der Brennraumbegrenzung des Brennraums 8 anlagert.

Die Haupteinspritzung HE des Kraftstoffs im Bereich des oberen Totpunkts dient bei den oben beschriebenen Einspritzstrategien einer heterogenen Gemischbildung und erlaubt eine Laststeigerung über die, durch den homogenen Anteil erzielbare Last hinaus. Zum Zeitpunkt der Haupteinspritzung HE ist eine Cool-Flame-Verbrennung des homogenen Anteils abgeschlossen und eine Hot-Flame-Verbrennung findet statt. Die Haupteinspritzung wird derart gestaltet, dass ein durch die Hauptverbrennung erzieltes Temperaturniveau nicht im Bereich verstärkter NOx-Bildung (Zeldovich-Mechanismus) liegt. Die Nacheinspritzung dient einer Reduktion der entstandenen Rußpartikel, da durch eine Herabsetzung der Haupteinspritzmenge um die Nacheinspritzmenge die Bildung von kraftstoffreichen Zonen verhindert werden kann.

In Fig. 5 ist eine Schematische Darstellung der Einspritzdüse 13 vom Typ Sacklochdüse, wobei eine Düse vom Typ Sitzlochdüse sich ebenso gut eignen würde. In der Einspritzdüse 13 gemäß Fig. 5 ist die Wirkung einer hervorgerufenen instabilen kavitierenden Strömung in einem Düsenloch 21 der Einspritzdüse 13 bei geringem Nadelhub h der Düsennadel 13a, d. h. bei teilweise geöffneter Einspritzdüse 13, und die dadurch erzielte Wirkung auf den Ausbreitungswinkel des Einspritzstrahls 17 dargestellt.

Auf der rechten Seite in Fig. 5 ist die Einspritzdüse 13 nur teilweise geöffnet, wodurch eine Drosselung im Düsennadelsitz 22 erzielt wird. Durch diese Drosselung tritt im Düsenloch 21 eine instabile kavitierende Strömung auf, die zum Ausbreitungswinkel α₁ des Kraftstoffstrahls 17 führt. Im Vergleich zu einer Einspritzdüse mit maximaler Hubeinstellung, wie auf der linken Seite der Fig. 5 dargestellt, ist der Ausbreitungswinkel α₁ durch die instabile kavitierende Strömung größer als ein Ausbreitungswinkel α₂, der ohne eine solche Strömung bewirkt wird. Die instabile kavitierende Strömung ruft starke Fluktuationen der Düseninnenströmung 23 hervor, welche beim Kraftstoffaustritt aus dem Düsenloch 21 zu einem verstärkten Kraftstoffstrahlzerfall führen und somit zu einem großen Ausbreitungswinkel α₁.

Der Kraftstoffstrahl mit dem Ausbreitungswinkel α₁ breitet sich im Brennraum mit einer intensiven Zerstäubung aus, und bewirkt somit eine bessere Homogenisierung sowie eine schnelle Kraftstoffverdampfung, so dass mehr Kraftstoff in einer Teilmenge der Voreinspritzung VE ohne eine nennenswerte Brennraumwandbenetzung eingespritzt werden kann.

Dagegen wird bei der Einspritzdüse 13 mit der maximalen Hubeinstellung gemäß der linken Seite in Fig. 5 eine stabile kavitierende Strömung ausgebildet. Diese ruft im inneren des Düsenlochs 21 auf der linken Seite eine zweiphasige Strömung 24 hervor, welche zu einem normalen Kraftstoffzerfall führt. Im Vergleich zu einer teilweise geöffneten Einspritzdüse ist der Ausbreitungswinkel α₂ durch die stabile kavitierende Strömung kleiner als der Ausbreitungswinkel α₁.

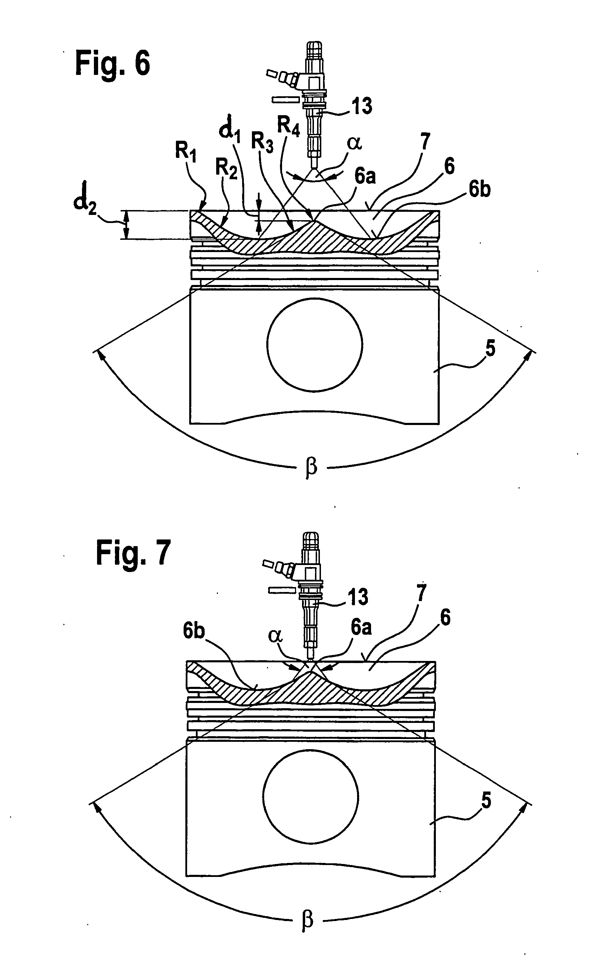

Fig. 6 zeigt die Anordnung der Einspritzdüse 13 sowie eines Kolbens 5 im Brennraum 8 während der getakteten Voreinspritzung. Der Kolben 5 befindet sich in der Hubkolbenbrennkraftmaschine 1 in einer derartigen Stellung während der Voreinspritzung VE zur Einspritzdüse 13, dass sich ein Kraftstoffkegelwinkel α in einem Bereich von 90° bis 160° einstellt.

Eine Kolbenmulde 6 ist im Kolbenboden 7 eingelassen. Die Kolbenmulde 6 ist tellerförmig ausgebildet, wobei sich in der Mitte der Kolbenmulde ein Vorsprung als eine Kolbenmuldenspitze 6a befindet. Die Kolbenmuldenspitze 6a ist durch einen Muldenboden 6b umrandet. Die Muldenspitze 6a raget in Richtung der Einspritzdüse 13 hinaus.

Die Kolbenmulde 6 weist am Rand als Übergang zum Kolbenboden 7 einen Radius R1 auf, der bevorzugt zwischen drei und sieben mm beträgt. Die äußeren Anteile des Muldenbodens 6b sind mit einem Kugelradius R2 von etwa 45 mm ausgebildet. Der Übergang von der Kolbenmuldenspitze 6a zum Kolbenmuldenboden 6b weist eine Krümmung mit einem Radius R3 von etwa 20 mm auf.

Die Kolbenmuldenspitze 6a befindet sich in etwa gegenüber der Einspritzdüse 13. Die Tiefe der Kolbenmulde 6 nimmt vom Rand der Kolbenmulde 6 bis hin zum Kolbenmuldenboden 6b zu. Die Kolbenmuldenspitze 6a erstreckt sich gegenüber der Einspritzdüse 13 derart, dass sie annähernd unterhalb des Kolbenbodens 7 bleibt. Der Abstand d1 zwischen dem oberen Punkt der Kolbenmuldenspitze 6a und dem Kolbenboden beträgt etwa 6 mm, wobei d2 bevorzugt zwischen 4 und 8 mm ausgebildet sein kann. Die Muldenbodentiefe d2 beträgt etwa 18 mm. Die tellerartige Muldengrundform weist im Randbereich der Kolbenmulde 6 einen abgerundeten Übergang zum Kolbenboden, um Ansammlungen des Kraftstoffs zu vermeiden.

Die Kolbenmuldenspitze 6a ist kegelartig mit einem Muldenkegelwinkel β im Bereich von 90° bis 130° ausgebildet und ist mit einer abgerundeten Spitze mit einem Radius R4 von etwa 5 mm ausgeführt. Der Kraftstoffkegelwinkel α und die Lage der Kolbenmuldenspitze 6a wirken derart zusammen, dass die Ausbreitung der Kraftstoffstrahlen durch die Kolbenmuldenspitze 6a nicht gestört wird. Somit ist gewährleistet, dass die Kraftstoffstrahlen im Bereich der Kolbenmulde 6 treffen.

Fig. 7 stellt die Anordnung der Einspritzdüse 13 und des Kolbens 25 im Brennraum 8 während der Haupteinspritzung HE dar, wo sich die Kolbenmuldenspitze 6a sehr vorteilhaft für den heterogenen Verbrennungsanteil zeigt. Der Kolben 5 befindet sich in einem Bereich um OT in einer derartigen Stellung, dass sich die eingespritzten Kraftstoffstrahlen innerhalb der Kolbenmulde 6 verteilen und entlang des Muldenbodens 6b optimal zünden.

Die Haupteinspritzung HE des Kraftstoffs im Bereich von OT dient einer heterogenen Gemischbildung , wobei zum Zeitpunkt der Haupteinspritzung HE eine Cool-Flame-Verbrennung des homogenen Anteils abgeschlossen ist und eine Hot-Flame-Verbrennung eingeleitet wird. Durch die im Kompressionshub erzielte Gemischbildung der voreingespritzten Kraftstoffmenge wird bei der Verbrennung bei einem hohen Luftüberschuss eine nennenswerte thermische NO-Bildung, sowie eine Rußbildung vermieden, da der Kraftstoff fein und weiträumig im gesamten Brennraum verteilt wird. Bei der Haupteinspritzung HE wirkt sich die Kolbenmuldenform sehr vorteilhaft, so dass für die heterogene Verbrennungsphase die thermische NO-Bildung deutlich vermindert, da die Sauerstoffkonzentration durch den vorangegangenen homogenen Verbrennungsanteil schon deutlich reduziert und durch die Kolbenmulde eine intensive turbulente Ladungsbewegung weiter unterstützt wird.

Die Erfindung geht von einer Brennkraftmaschine mit einer Kompressionszündung aus, bei der Kraftstoff mittels einer Einspritzdüse 13 mit mehreren Einspritzbohrungen direkt in einen Brennraum 8 als Vor- und Haupteinspritzung einspritzt wird, wobei die Voreinspritzung VE getaktet erfolgt. Um die Benetzung der Brennraumwände zu minimieren, wird ein Brennraum 8 vorgeschlagen, in dem eine Einspritzdüse 13 im Bereich einer Zylindermittelachse im Zylinderkopf 10 und eine im Kolbenboden 7 angeordnete Kolbenmulde 6 angeordnet sind, wobei in der Kolbenmulde 6 ein annähernd mittig liegender Kolbenmuldenvorsprung angeordnet ist, und der Hub einer Düsennadel der Einspritzdüse 13 derart eingestellt wird, dass eine Begrenzung der Reichweite der einsgespritzten Kraftstoffstrahlen erzielt wird.

## Patentansprüche

1. Verfahren zum Betrieb einer selbstzündenden Hubkolbenbrennkraftmaschine, bei der Kraftstoff mittels einer eine Düsennadel und Einspritzbohrungen umfassenden Einspritzdüse in mehreren Kraftstoffstrahlen bestimmter Reichweite direkt in einen Brennraum eingespritzt wird, wobei aus einem Einspritzzyklus ein Teil des Kraftstoffes im Verdichtungstakt als getaktete Voreinspritzung in Teilmengen und der restliche Kraftstoff als Haupteinspritzung zu einem späteren Zeitpunkt in den Brennraum mit einem höheren Einspritzdruck als während der Voreinspritzung eingespritzt wird, und wobei die Taktung der Voreinspritzung derart erfolgt, dass bei jeder Teilmenge die Reichweite des Kraftstoffstrahls im Brennraum so begrenzt wird, dass die Reichweite in etwa kleiner ist als eine Entfernung bis zu einer Brennraumbegrenzung, wobei gleichzeitig ein Zerfall der eingespritzten Kraftstoffstrahlen verstärkt wird,
**dadurch gekennzeichnet, dass**
der Druck des eingespritzten Kraftstoffs während der getakteten Voreinspritzung angehoben wird.

2. Verfahren nach Anspruch 1, **dadurch gekennzeichnet, dass** während der getakteten Voreinspritzung ein Hub der Düsennadel der Einspritzdüse variiert wird.

3. Verfahren nach einem der vorhergehenden Ansprüche, **dadurch gekennzeichnet, dass** eine Taktdauer während der Voreinspritzung variiert wird, so dass die Kraftstoffteilmengen der Voreinspritzung unterschiedlich erfolgen.

4. Verfahren nach einem der vorhergehenden Ansprüche, **dadurch gekennzeichnet, dass** die Taktdauer der Voreinspritzung variiert wird, so dass eine später eingespritzte Kraftstoffteilmenge größer als eine vorherige Kraftstoffteilmenge erfolgt.

5. Verfahren nach Anspruch 3 oder 4, **dadurch gekennzeichnet, dass** die letzte Kraftstoffteilmenge der Voreinspritzung gegenüber einer größten und vorher erfolgten Kraftstoffteilmenge der Voreinspritzung verringert wird.

6. Verfahren nach einem der vorhergehenden Ansprüche, **dadurch gekennzeichnet, dass** der Hub der Düsennadel der Einspritzdüse derart variiert wird, dass eine instabile kavitierende Strömung in den Einspritzbohrungen der Einspritzdüse erzeugt wird, wodurch eine erhöhte Zerstäubung der Kraftstoffs im Brennraum erzielt wird.

7. Verfahren nach einem der vorhergehenden Ansprüche, **dadurch gekennzeichnet, dass** während der Voreinspritzung mittels einer im Brennraum gebildeten Drallbewegung eine während eines Einspritztaktes erzeugte Kraftstoffwolke eines Kraftstoffstrahls versetzt oder seitlich verschoben wird, so dass bei einem nachfolgenden Einspritztakt die neu eingespritzten Kraftstoffstrahlen nicht in die Kraftstoffwolke der vorangegangenen Einsprittaktes eindringen.

8. Verfahren nach einem der vorhergehenden Ansprüche,
**dadurch gekennzeichnet, dass**
der Hub der Düsennadel der Einspritzdüse derart eingestellt ist, dass innerhalb der Einspritzdüse ein effektiver Strömungsquerschnitt zwischen der Düsennadel und dem Nadelsitz etwa das 0.4 bis 1.5-fache eines effektiven Strömungsquerschnittes der Summe aller Einspritzbohrungen beträgt.

9. Verfahren nach einem der vorhergehenden Ansprüche, **dadurch gekennzeichnet, dass** der Brennraum von einem eine tellerförmige Kolbenmulde umfassenden Kolben begrenzt wird, wobei sich ein Vorsprung aus der Mitte der Kolbenmulde in Richtung der gegenüberliegenden Einspritzdüse erstreckt.

## Claims

1. Method for the operation of a self-igniting, reciprocating-piston internal combustion engine, in which the fuel is injected directly into a combustion chamber, by means of an injection nozzle comprising a nozzle needle and injection bores, in a plurality of fuel jets of defined range, in such manner that in an injection cycle part of the fuel is injected into the combustion chamber during the compression stroke as a pulsed pre-injection of part-quantities and the remainder of the fuel as a main injection at a later time and at a higher injection pressure than during the pre-injection, the pre-injection being pulsed in such manner that for each part-quantity the range of the fuel jet is restricted to a value somewhat smaller than the distance to a boundary of the combustion chamber, and at the same time the disintegration of the injected fuel jet is increased,
**characterised in that**
the pressure of the injection fuel is increased during the pulsed pre-injection.

2. Method according to Claim 1, **characterised in that** a stroke of the nozzle needle of the injection nozzle is varied during the pulsed pre-injection.

3. Method according to either of the preceding claims, **characterised in that** the pulse durations of the pre-injection are varied so that the fuel part-quantities of the pre-injection are different.

4. Method according to any of the preceding claims, **characterised in that** the pulse durations during the pre-injection are varied so that a fuel part-quantity injected later is larger than an earlier fuel part-quantity.

5. Method according to Claims 3 or 4, **characterised in that** compared with the largest and previous fuel part-quantity of the pre-injection, the last fuel part-quantity of the pre-injection is reduced.

6. Method according to any of the preceding claims, **characterised in that** the stroke of the nozzle needle of the injection nozzle is varied in such manner that unstable, cavitational flow is produced in the injection bores of the injection nozzle, whereby the atomisation of the fuel in the combustion chamber is increased.

7. Method according to any of the preceding claims, **characterised in that** during the pre-injection, a fuel cloud of a fuel jet produced during an injection pulse is displaced or pushed sideways by a swirl movement in the combustion chamber, so that during a subsequent injection pulse the newly injected fuel jets do not penetrate into the fuel cloud of the previous injection pulse.

8. Method according to any of the preceding claims, **characterised in that** the stroke of the nozzle needle of the injection nozzle is set in such manner that within the injection nozzle, and effective flow cross-section between the nozzle needle and the needle seat is approximately 0.4 to 1.5 times the effective cross-section of the sum of all the injection bores.

9. Method according to any of the preceding claims, **characterised in that** the combustion chamber is delimited by a piston having a disc-shaped piston recess, and a projection from the middle of the piston recess extends in the direction of the injection nozzle opposite it.

## Revendications

1. Procédé pour le fonctionnement d'un moteur à combustion interne à piston alternatif et à autoallumage, sur lequel le carburant est injecté directement dans une chambre de combustion au moyen d'un injecteur comprenant une aiguille et des alésages d'injection en plusieurs faisceaux de carburant de portée définie, une partie du carburant provenant d'un cycle d'injection étant injectée dans le cycle de compression sous forme de pré-injection synchronisée dans des quantités partielles et le carburant restant étant injecté à un moment ultérieur dans la chambre de combustion avec une pression d'injection supérieure à la pression pendant la pré-injection, et la synchronisation de la pré-injection s'effectuant de telle sorte, pour chaque quantité partielle, la portée du jet de carburant dans la chambre de combustion est limitée de telle sorte que la portée est à peu près inférieure à une distance jusqu'à une limitation de la chambre de combustion, une décomposition des jets de carburant injectés étant renforcée simultanément,
**caractérisé en ce que**
la pression du carburant injecté est augmentée pendant la pré-injection synchronisée.

2. Procédé selon la revendication 1,
**caractérisé en ce qu'**une course de l'aiguille de l'injecteur est modifiée pendant la pré-injection synchronisée.

3. Procédé selon l'une quelconque des revendications précédentes, **caractérisé en ce qu'**une durée de cycle est modifiée pendant la pré-injection, de sorte que les quantités partielles de carburant de la pré-injection s'effectuent différemment.

4. Procédé selon l'une quelconque des revendications précédentes,
**caractérisé en ce que** la durée du cycle de pré-injection est modifiée, de sorte qu'une quantité partielle de carburant injectée plus tard est supérieure à une quantité partielle de carburant préalable.

5. Procédé selon la revendication 3 ou 4, **caractérisé en ce que** la dernière quantité partielle de carburant de la pré-injection est réduite par rapport à une quantité de carburant maximale et effectuée auparavant de la pré-injection.

6. Procédé selon l'une quelconque des revendications précédentes,
**caractérisé en ce que** la course de l'aiguille de l'injecteur est modifiée de telle sorte qu'un écoulement instable et cavitaire est généré dans les trous d'injection de l'injecteur, de sorte qu'on obtient une pulvérisation élevée du carburant dans la chambre de combustion.

7. Procédé selon l'une quelconque des revendications précédentes,
**caractérisé en ce que**, pendant la pré-injection, un nuage de carburant, généré pendant un cycle d'injection, d'un jet de carburant est décalé ou déplacé latéralement au moyen d'un mouvement de rotation formé dans la chambre de combustion, de sorte que, lors d'un cycle d'injection consécutif, les nouveaux jets de carburant injectés ne pénètrent pas dans le nuage de carburant du cycle d'injection précédent.

8. Procédé selon l'une quelconque des revendications précédentes, **caractérisé en ce que**
la course de l'aiguille de l'injecteur est réglée de telle sorte que, à l'intérieur de l'injecteur, une section d'écoulement efficace entre l'aiguille d'injection et le siège de l'aiguille représente environ 0,4 à 1,5 fois une section d'écoulement efficace de la somme de tous les trous d'injection.

9. Procédé selon l'une quelconque des revendications précédentes,
**caractérisé en ce que** la chambre de combustion est limitée par un piston comprenant une cavité de piston en forme de plateau, une partie saillante s'étendant depuis le centre de la cavité de piston en direction de l'injecteur opposé.
